Europäisches Patentamt

European Patent Office

Office européen des brevets

(11) Veröffentlichungsnummer: **0 222 121**
**B1**

## EUROPÄISCHE PATENTSCHRIFT

(45) Veröffentlichungstag der Patentschrift: **18.04.90**

(21) Anmeldenummer: **86113239.7**

(22) Anmeldetag: **26.09.86**

(51) Int. Cl.⁵: **A 47 J 43/046, B 02 C 18/12**

(54) Schneid- und Mischwerkzeug für eine elektrische Küchenmaschine.

(30) Priorität: **29.10.85 DE 3538383**

(43) Veröffentlichungstag der Anmeldung:
**20.05.87 Patentblatt 87/21**

(45) Bekanntmachung des Hinweises auf die
Patenterteilung:
**18.04.90 Patentblatt 90/16**

(84) Benannte Vertragsstaaten:
**BE DE FR GB IT NL SE**

(56) Entgegenhaltungen:
**CH-A- 431 842
DE-A-3 144 438
DE-B-1 185 782
DE-C-1 119 145
FR-A-2 458 317
US-A-4 173 310
US-A-4 200 244**

(73) Patentinhaber: **Braun Aktiengesellschaft
Rüsselsheimer Strasse 22
D-6000 Frankfurt/Main (DE)**

(72) Erfinder: **Franke, Wolfgang
Walter-Rietig-Strasse 41
D-6070 Langen (DE)**
Erfinder: **Hufnagl, Walter
Idsteiner Weg 34
D-6246 Glashütten 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine Schneid- und Mischwerkzeug für eine elektrische Küchenmaschine, das in einem Arbeitsbehälter in Nähe des Bodens in Rotationsbewegung versetzbar ist, das einen mit einer Antriebsachse verbindbaren Mittelschaft und in verschiedenen Drehebenen an diesem befestigte, insbesondere sichelförmige Klingen aufweist, deren unterschiedlich gekrümmten Vorderkanten als Schneiden ausgebildet sind, wobei die untere Klinge in geringem Abstand zum Boden des Arbeitsbehälters verläuft.

Ein derartiges Schneid- und Mischwerkzeug ist aus der DE—B—11 85 782 bekannt. Hierbei verlaufen einige Schneidmesser zur Vergrößerung der Schnittfläche entgegen der Drehrichtung und einige in Drehrichtung. Einige Schneidmesser sind dazu noch in ihrer Drehebene gebogen ausgeführt. Die große Anzahl der Messer führt beim Zerkleinern von Nahrungsmitteln zu hohen Motordrehmomenten, so daß bei dieser Küchenmaschine nur drehmomentstarke Antriebsmotoren verwendet werden können. Dies verteuert aber die Herstellung einer Küchenmaschine erheblich. Ein weiterer Nachteil dieses Schneid- und Mischwerkzeugs besteht darin, daß, weil die Messer nicht genug an die Innenwand des Arbeitsbehälters heranragen, die in der Nähe der Innenwand liegenden Nahrungsmittel überhaupt nicht mehr erfaßt werden und somit auch nicht mehr zerkleinert bzw. durchgemischt werden können. Auch dadurch, daß die Messer am Boden des Arbeitsbehälters drehbar befestigt sind, können diese zum Zwecke der Reinigung bzw. zum Auswechseln nicht schnell genug demontiert werden.

Weiterhin ist aus der US-PS 4,200,244 ein Schneid- und Mischwerkzeug für einen Küchenmaschine bekannt, das aus einem Messereinsatz mit Schneidmessern einheitlicher Schneidgeometrie besteht und bei dem zwei Schneidmesser in übereinanderliegenden Ebenen angeordnet sind. Diese Anordnung wurde in der Erkenntnis gewählt, daß bei einem zu tiefen Anordnen der Messer in der üblichen Form — nämlich in gleichen Ebenen — härtere Güter, bei denen der Schwerpunkt oberhalb der von den Schneidmessern gebildeten Ebene liegt, einfach nach oben geschleudert und somit nicht zerkleinert werden, während eine zu hohe Anordnung der Messer den Feinheitsgrad der Nahrungsmittel nachteilig beeinflussen würde.

Weiterhin sind zur Vergrößerung der Schnittfläche die Schneidmesser entgegen der Drehrichtung gebogen ausgeführt, wobei die freien Enden der Schneidkanten nahezu parallel zur Behälterinnenwand verlaufen, was für die Zerkleinerung von weichen Gütern, wie Petersilie, Zwiebeln, Knoblauch, usw., vorteilhaft ist, nicht jedoch für die Zerkleinerung von härteren Gütern, wie Nüsse, Möhren, usw., geeignet ist, da es dabei leicht zu einem Verklemmen des Gutes zwischen dem Messer und der Topfwandung kommt.

Aufgabe der Erfindung ist es daher, ein Schneid- und Mischwerkzeug für eine Vielzweckküchenmaschine anzugeben, das sowohl für das Zerkleinern von harten als auch von weichen Nahrungsmitteln bei optimalem Zerkleinerungsgrad gleichermaßen gut geeignet ist und bei dem es nicht zum Verklemmen des Mahlgutes zwischen den Messern und dem Arbeitsbehälter kommt.

Diese Aufgabe wird erfindungsgemäß dadurch gelöst, daß das Schneid- und Mischwerkzeug aus zwei im wesentlichen diametral gegenüberliegenden, entgegen der Drehrichtung gekrümmt verlaufenden Klingen besteht, daß die am radial äußeren, freien Ende an die Schneidkante der unteren Klinge angelegte Tangente mit der an die Innenwand des Arbeitsbehälters angelegten Tangente, deren Berührungspunkt dem Ende der Schneidkante radial gegenüberliegt, einen Winkel ($\alpha$) zwischen 0° und 20° bildet, daß die am radial äußeren, freien Ende an die Schneidkante der oberen Klinge angelegte Tangente mit der an die Innenwand des Arbeitsbehälters angelegten Tangente, deren Berührungspunkt radial dem Ende der Schneidkante gegenüberliegt, einen Winkel ($\beta$) zwischen 40° und 60° bildet und daß die dem Boden ferene, obere Klinge in radialer Richtung zum Boden des Arbeitsbehälters derart um den Winkel ($\gamma$) geneigt ist, daß der äußere Bereich der Klinge, senkrecht zum Boden gemessen, einen geringeren Abstand aufweist als der radial innere Bereich der Klinge.

Nach der Erfindung werden also bei einem rotierenden Messereinsatz für eine Küchenmaschine nur noch zwei Messer in unterschiedlichen Ebenen angeordnet, wobei die Schneidgeometrie der beiden Messer unterschiedlich so gewählt ist, daß härtere und großstückige Teile im wesentlichen von dem oberen Schneidmesser zerkleinert werden und kleinere Teile oder das schon teilweise von der oberen Klinge zerkleinerte Gut von dem unteren Messer zu der gewünschten Größenanordnung zerkleinert wird. Durch die Schneidgeometrie der Messer wird bei schnellster Zerkleinerung bzw. Mischung der Nahrungsmittel erheblich weniger Energie aufwendet, als dies bei herkömmlichen Messern der Fall war.

Gleichzeitig entsteht durch den Winkel eine zum Boden gerichtete, auf das Werkzeug einwirkende Kraftkomponente, die aber nicht aus den von den Nahrungsmitteln erzeugten Zentrifugalkräften resultiert, sondern die durch die von Nahrungsmitteln beim Schneiden auf die Klinge einwirkenden Umfangskräfte hervorgerufen wird. Dies hat den entscheidenden Vorteil, daß auch beim Rühren bzw. Kneten von besonders zähem Teig trotz der geringeren Umfangsgeschwindigkeiten das Schneid- und Mischwerkzeug dennoch mit ausreichender Kraft in Richtung des Bodens gedrückt wird, da zäher Teig immer noch ausreichend schnell durchschnitten und kaum nach außen gegen die Behälterwand geschleudert wird. Hierbei verläuft das untere Messer im wesentlichen parallel und nur in geringem Abstand zum Boden des Arbeitsbehälters, so daß auch die zwischen der unteren Klinge und dem Boden vorhandenen Nahrungsmittel immer wieder erfaßt, durchmischt und zerkleinert werden.

Beträgt der Anstellwinkel γ des Obermessers zum Boden etwa 5° bis 10°, so ergeben sich auch bei leichtesten Messerausführungen immer noch ausreichende Werte, die eine genügend große Kraftkomponente auf das obere Messer in Richtung des Bodens des Arbeitsbehälters erzeugen. Vorzugsweise beträgt dieser Winkel 7° bis 9°.

Um auch Mischungen aus recht unterschiedlichen Gütern (weichen und harten) in einem Arbeitsgang zu zerkleinern — was bisher überhaupt nicht möglich war —, ist in einer Weiterbildung der Erfindung vorgesehen, daß die Krümmung zumindest an den radial äußeren Endbereichen der Schneidkanten von der oberen Klinge zu der unteren, bodennäheren Klinge zunimmt.

Damit der Verkantungseffekt soweit wie möglich reduziert wird ist in einer Weiterbildung der Erfindung vorgesehen, daß der radial äußere Bereich der Schneidkante der oberen Klinge von einer Geraden gebildet wird.

Damit das zu zermahlende Gut gleichmäßig erfaßt und zerkleinert wird, ist in einer Weiterbildung der Erfindung vorgesehen, daß die obere Klinge in Umfangsrichtung zum Boden des Arbeitsbehälters derart geneigt ist, daß das freie Ende der Klinge, senkrecht zum Boden gemessen, einen geringeren Abstand aufweist als das eingespannte Ende der oberen Klinge. Beträgt hierbei, in Umfangsrichtung des oberen Messers gesehen, der senkrechte Abstand von dem festen zum freien Ende etwa zwei Millimeter, so erhält man ein besonders gleichmäßig bearbeitetes und zermahlenes Gut.

Ein Ausführungsbeispiel der Erfindung ist in der Zeichnung dargestellt und wird im folgenden näher beschrieben.

Es zeigen:

Fig. 1 einen Längsschnitt durch den Arbeitsbehälter mit einer Seitenansicht eines Schneid- und Mischwerkzeugs,

Fig. 2 eine Draufsicht auf das Schneid- und Mischwerkzeug und auf den Arbeitsbehälter nach Fig. 1,

Fig. 3 Teillängsschnitt in vergrößertem Maßstab nach der Schnittführung III—III in Fig. 2, bei der der Mittelschaft des Schneid- und Mischwerkzeugs nicht dargestellt ist und

Fig. 4 Seitenansicht in vergrößertem Maßstab in Pfeilrichtung V nach Fig. 2, wobei nur das obere Messer dargestellt ist.

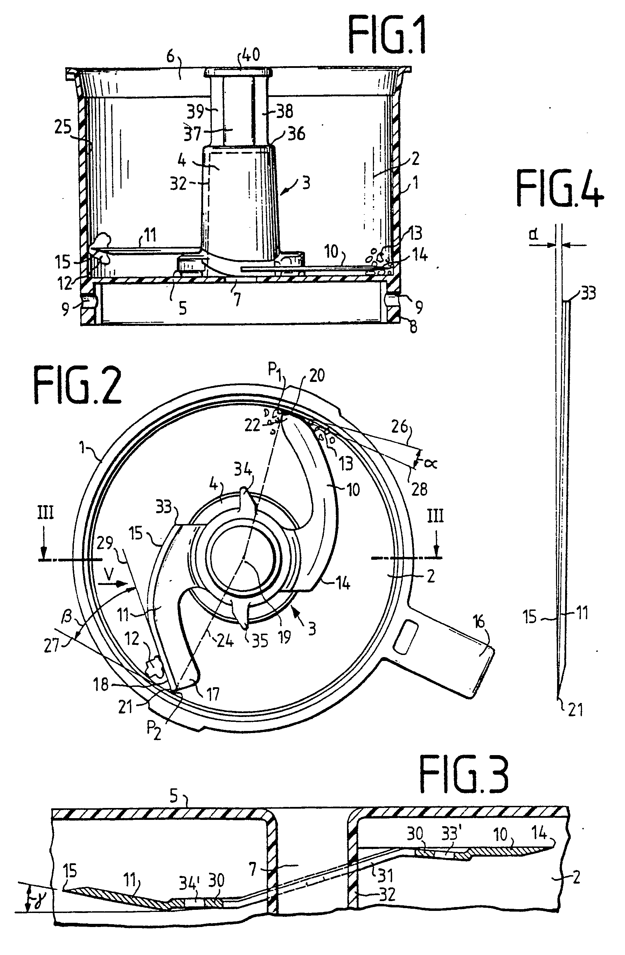

Zur Verbeidung von Wiederholungen werden in den Fig. 1 bis 4 für entsprechend gleiche Bauteile Bezugzeichen verwendet.

In den Fig. 1 und 2 ist der Arbeitsbehälter 1 einer Küchenmaschine dargestellt, in deren Innenraum 2 konzentrisch ein Schneid- und Mischwerkzeug 3 angeordnet ist. Der vorzugsweise aus Kunststoff hergestellte Mittelschaft 4 verläuft vom Boden 5 des Arbeitsbehälters 1 in der Zeichnung nach oben und endet etwa in Höhe der Öffnung 6 des Arbeitsbehälters 1. Die Öffnung 6 ist durch einen in der Zeichnung nicht dargestellten Deckel verschließbar, der erst bei richtigem Verschluß eine Drehung des Schneid- und Mischwerkzeugs 3 durch eine ebenfalls in der Zeichnung nicht dargestellte elektromotorische Antriebseinheit zuläßt, die mit einer in der Zeichnung nicht dargestellten Antriebswelle verbunden ist, die den Boden 5 über eine Bohrung 7 durchdringt. Die Antriebswelle dringt in eine in den Mittelschaft 4 hineinragende, in der Zeichnung ebenfalls nicht dargestellte Sacklochbohrung ein und ist dort über eine ebenfalls nicht dargestellte Mitnehmerverbindung mit dem Mittelschaft 4 drehfest verbunden.

An den Boden 5 schließt sich in der Zeichnung nach unten ein dem Durchmesser des Arbeitsbehälters 1 entsprechender Ringabschnitt 8 an, der zur Zentrierung und zur Befestigung des Arbeitsbehälters 1 auf einem in der Zeichnung nicht dargestellten Sockel einer Küchenmaschine dient. Die Befestigungsmittel werden am Arbeitsbehälter 1 durch Schlitze 9 gebildet, in die beim Aufsetzen des Arbeitsbehälters 1 auf den Sockel der Küchenmaschine in der Zeichnung nicht dargestellte Vorsprünge hineinragen, die mit den Schlitzen 9 eine bajonettähnliche Verbindung bilden.

Geringfügig oberhalb des Bodens 5 sind in dem Mittelschaft 4 zwei im wesentlichen diametral und übereinander angeordnete Klingen 10, 11 befestigt, die vorzugsweise in dem Mittelschaft 4 eingespritzt sind. Die untere Klinge 10 ist relativ nah am Boden 5 des Arbeitsbehälters 1 am Mittelschaft 4 gehalten, während die im wesentlichen gegenüberliegende Klinge 11 etwas höher angeordnet ist, um ein entsprechend größkörniges Gut 12 oberhalb seines Schwerpunktes zu treffen und zu zerkleinern. Die untere Klinge 10 hingegen übernimmt dann die entgültige Zerkleinerung, so daß kleingemahlenes Gut 13 entsteht. Die in Umfangsrichtung radial äußeren Enden der Klingen 10, 11 bilden die Schneidkanten 14, 15. Um besonders scharfe Schneidkanten 14, 15 zu erhalten, sind die Enden der Klingen 10, 11 auf ihrer Ober- und/oder Unterseite abgeschrägt.

In Fig. 2 erstreckt sich vom Arbeitsbehälter 1 radial nach außen ein Griff 16, der zur besseren Handhabung des Arbeitsbehälters 1 dient.

In den Fig. 2, 3 und 4 ist zur Verdeutlichung die Schneidgeometrie der Klingen 10, 11 wiedergegeben. In Fig. 2 wird deutlich, daß die untere Klinge 10 über den gesamten Bereich der Schneidkante 14 gekrümmt ist, während an der oberen Klinge 11 der Verlauf der Schneidkante 15 zum freien Ende 17 von einer Geraden 18 gebildet wird. Der Geradenschneidkantenverlauf an der oberen Klinge 11 erstreckt sich etwa über ein Drittel der Schneidkantenlänge, ausgehend von dem freien Ende 17.

Verbindet man die radial äußeren Eckpunkte 20, 21, die das Ende der Schneidkanten 14, 15 am freien Ende 22, 17 der Klingen 10, 11 bilden, jeweils mit dem Mittelpunkt 19 des Schneid- und Mischwerkzeugs 3, so erhält man die in Fig. 2 gestrichelt dargestellten Geraden 23, 24, die in ihrer Verlängerung über die Klingen 10, 11 radial hinaus die Innenwandung 25 des Arbeitsbehälters 1 schneiden. Die hierdurch gebildeten Schnittpunkte werden mit P1 und P2 bezeichnet. Legt man nun an die Innenwandung 25 in den Schnittpunkten P1, P2 Tangenten 26, 27, so bilden sie, wenn man ebenso an die Schnittkanten 14, 15 in den Eckpunkten 20, 21 Tangenten 28, 29 anlegt, mit diesen jeweils einen Winkel α bzw. β. Besonders gute Schneidergebnisse werden erzielt, wenn der Winkel α etwa 15° und der Winkel β etwa 45° beträgt.

In Fig. 3 sind der Einfachheit halber lediglich die beiden Klingen 10, 11 dargestellt, die über einen ringförmigen Blechabschnitt 30 miteinander verbunden sind. Der Blechabschnitt 30 weist eine zentrale Bohrung 31 auf, die von einem sich in dieser Zeichnung von oben nach unten erstreckenden, ringförmigen Hals 32 durchdrungen wird. Der Hals 32 ist an den Boden 5 des Arbeitsbehälters 1 angeformt. Der Hals 32 wird von einer in der Zeichnung von oben nach unten verlaufenden, aber nicht dargestellten Antriebswelle der Küchenmaschine durchdrungen.

Radial außerhalb des Halses 32 verläuft nach Fig. 1 der Mittelschaft 4, der am Blechabschnitt 30 angespritzt ist und deren radial äußere Wandung die im Blechabschnitt 30 ausgebildeten Bohrungen 33′, 34′ durchdringt.

Von dem Mittelschaft 4 ragt in Fig. 3 von unten in den Hals 32 ein rohrförmiger Abschnitt, der in der Zeichnung ebenfalls nicht dargestellt ist, hinein, in den die Antriebswelle eingreift. Zwischen der Antriebswelle und dem rohrförmigen Abschnitt ist eine Mitnehmerverbindung, beispielsweise ein Sechskant vorgesehen.

Während nach Fig. 3 die Klinge 10 im wesentlichen parallel zum Boden 5 verläuft, so ist die Klinge 11 zum Boden 5 geneigt. Der sich hierbei ergebende Winkel γ erstreckt sich von etwa 5° bis 10°. Vorzugsweise beträgt dieser Winkel γ jedoch 7° bis 9°.

In Fig. 4 beträgt der Abstand a, der sich zwischen dem Eckpunkt 21 und dem am anderen Ende ausgebildeten Eckpunkt 33 an der oberen Klinge 11 ergibt, beträgt etwa zwei Millimeter.

Die in den Fig. 1 und 2 am Mittelschaft 4 ausgebildeten Vorsprünge 34, 35 dienen zum besseren Verrühren des zu zerkleinernden bzw. des zu vermischenden Gutes.

In Fig. 1 verläuft der Mittelschaft 4 im wesentlichen kegelförmig nach oben. Über die Ringstufe 36 verjüngt sich der Mittelabschnitt 4 in der Zeichnung nach oben. An dem hierdurch gebildeten Schaft 37 sind diametral gegenüberliegend Stege 38, 39 angeformt, die an ihren oberen Enden von einer kreisförmigen Scheibe 40 begrenzt werden. Der Schaft 37, die Stege 38, 39 und die Scheibe 40 dienen zur besseren Handhabung des Schneid- und Mischwerkzeugs 3 und zum Kneten von Teigen.

**Patentansprüche**

1. Schneid- und Mischwerkzeug (3) für eine elektrische Küchenmaschine, das in einem zylindrischen Arbeitsbehälter (1) in Bodennähe in Rotationsbewegung versetzbar ist, das einen mit einer Antriebsachse verbindbaren Mittelschaft (4) und in verschiedenen Drehebenen an diesem befestigte, insbesondere sichelförmige Klingen (10, 11) aufweist, deren unterschiedlich gekrümmten Vorderkanten als Schneiden (14, 15) ausgebildet sind, wobei die untere Klinge (10) in geringem Abstand zum Boden (5) des Arbeitsbehälters (1) verläuft, dadurch gekennzeichnet, daß das Schneid- und Mischwerkzeug (3) aus zwei im wesentlichen diametral gegenüberliegenden, entgegen der Drehrichtung gekrümmt verlaufenden Klingen (10, 11) besteht, daß die am radial äußeren, freien Ende (20) an die Schneidkante (14) der unteren Klinge (10) angelegte Tangente (28) mit der an die Innenwand (25) des Arbeitsbehälters (1) angelegten Tangente (26), deren Berührungspunkt (P1) dem Ende (20) der Schneidkante (14) radial gegenüberliegt, einen Winkel (α) zwischen 0° und 20° bildet, daß die am radial äußeren, freien Ende (17) an die Schneidkante (15) der oberen Klinge (11) angelegte Tangente (29) mit der an die Innenwand (25) des Arbeitsbehälters (1) angelegten Tangente (27), deren Berührungspunkt (P2) radial dem Ende (21) der Schneidkante (15) gegenüberliegt, einen Winkel (β) zwischen 40° und 60° bildet und daß die dem Boden (5) fernere, obere Klinge (11) in radialer Richtung zum Boden (5) des Arbeitsbehälters (1) derart um den Winkel (γ) geneigt ist, daß der äußere Bereich der Klinge (11), senkrecht zum Boden (5) gemessen, einen geringeren Abstand aufweist als der radial innere Bereich der Klinge (11).

2. Schneid- und Mischwerkzeug nach Anspruch 1, dadurch gekennzeichnet, daß sich der Winkel (γ) zwischen 5° und 10° erstreckt, vorzugsweise zwischen 7° und 9° liegt.

3. Schneid- und Mischwerkzeug nach Anspruch 1, dadurch gekennzeichnet, daß die Krümmung zumindest an den radial äußeren Endbereichen (17, 22) der Schneidkanten (14, 15) von der oberen Klinge (11) zu der unteren, bodennäheren Klinge (10) zunimmt.

4. Schneid- und Mischwerkzeug nach Anspruch 1 oder 2, dadurch gekennzeichnet, daß der radial äußere Bereich der Schneidkante (15) der oberen Klinge (11) von einer Geraden (18) gebildet wird.

5. Schneid- und Mischwerkzeug nach Anspruch 1, dadurch gekennzeichnet, daß die dem Boden (5) fernere, obere Klinge (11) in Umfangsrichtung zum Boden (5) des Arbeitsbehälters (1) derart geneigt ist, daß das freie Ende (17) der Klinge (11), senkrecht zum Boden (5) gemessen, einen geringeren Abstand aufweist als das eingespannte Ende der oberen Klinge (11).

6. Schneid- und Mischwerkzeug nach Anspruch 5, dadurch gekennzeichnet, daß, in Umfangsrichtung der oberen Klinge (11) gesehen, der senkrechte Abstand (a) vom freien Ende (21) zum fest eingespannten Ende am Mittelschaft (4) etwa 2 mm beträgt.

## Revendications

1. Outil coupant et mélangeur (3) d'un appareil ménager électrique, qui, dans un récipient de travail cylindrique (1), peut être déplacé suivant un mouvement de rotation à proximité du fond, et présente un arbre central (4), qui peut être relié à un axe d'entraînement, et des lames (10, 11) en particulier en forme de croissant qui sont fixées sur cet arbre dans différents plans de rotation et dont les bords avant différemment courbés sont réalisés sous la forme de tranchants (14, 15), la lame inférieure (10) s'étendant à faible distance du fond (5) du récipient de travail (1), caractérisé en ce que l'outil coupant et mélangeur (3) est constitué de deux lames (10, 11) qui sont disposées l'une par rapport à l'autre de manière sensiblement diamétralement opposée et qui s'étendent de manière courbée dans le sens inverse au sens de rotation, en ce que la tangente (28) dressée à l'extrémité libre (20) radialement extérieure sur le bord de coupe (14) de la lame inférieure (10) forme un angle (α) compris entre 0° et 20° avec la tangente (26) qui est dressée sur la paroi interne (25) du récipient de travail (1) et dont le point de contact (P1) est situé radialement en face de l'extrémité (20) du bord de coupe (14), en ce que la tangente (29) dressée à l'extrémité libre (17) radialement extérieure sur le bord de coupe (15) de la lame supérieure (11) forme un angle (β) compris entre 40° et 60° avec la tangente (27) qui est dressée sur la paroi interne (25) du récipient de travail (1) et dont le point de contact (P2) se situe radialement en face de l'extrémité (21) du bord de coupe (15) et en ce que la lame supérieure (11), plus éloignée du fond (5), est suivant la direction radiale inclinée de l'angle (γ) par rapport au fond (5) du récipient de travail (1) de telle façon que la zone extérieure de la lame (11) présente, mesurée perpendiculairement par rapport au fond (5), une distance plus faible que la zone radialement intérieure de la lame (11).

2. Outil coupant et mélangeur suivant la revendication 1, caractérise en ce que l'angle (γ) est compris entre 5° et 10°, de préférence entre 7° et 9°.

3. Outil coupant et mélangeur suivant la revendication 1, caractérisé en ce que la courbure, au moins sur les zones d'extrémité radialement extérieures (17, 22) des bords de coupe (14, 15), croît de la lame supérieure (11) à la lame inférieure (10) plus proche du fond.

4. Outil coupant et mélangeur suivant l'une des revendications 1 et 2, caractérisé en ce que la zone radialement extérieure du bord de coupe (15) de la lame supérieure (11) est formée d'une droite (18).

5. Outil coupant et mélangeur suivant la revendication 1, caractérisé en ce que la lame supérieure (11) plus éloignée du fond (5), est inclinée suivant la direction périphérique par rapport au fond (5) du récipient de travail (1) de telle façon que l'extrémité libre (17) de la lame (11) présente, mesurée perpendiculairement par rapport au fond (5), une distance plus faible que l'extrémité enserrée de la lame supérieure (11).

6. Outil coupant et mélangeur suivant la revendication 5, caractérisé en ce que, vue suivant la direction périphérique de la lame supérieure (11), la distance (a) perpendiculaire entre l'extrémité libre (21) et l'extrémité enserrée de manière fixe sur l'arbre central (4) est d'environ 2 mm.

## Claims

1. A cutting and blending tool (3) for an electric food processing apparatus, which is adapted to rotate in a cylindrical working vessel (1) near the bottom surface thereof and includes a central hub (4) adapted to be coupled to a drive shaft and particularly crescent-shaped blades (10, 11) secured to the hub in different planes of rotation, the blades having differently curved leading edges on which cutting edges (14, 15) are formed, with the lower blade (10) extending at a small distance relative to the bottom surface (5) of the working vessel (1), characterized in that the cutting and blending tool (3) is comprised of two substantially diametrically opposite blades (10, 11) extending in a curved pattern in opposition to the direction of rotation, that the tangent (28) applied to the cutting edge (14) of the lower blade (10) at the radially outer free end (20) thereof forms an angle (α) of between 0° and 20° with the tangent (26) applied to the inner wall (25) of the working vessel (1), which latter tangent has its point of contact (P1) radially opposite the end (20) of the cutting edge (14), that the tangent (29) applied to the cutting edge (15) of the upper blade (11) at the radially outer free end (17) thereof forms an angle (β) of between 40° and 60° with the tangent (27) applied to the inner wall (25) of the working vessel (1), which latter tangent has its point of contact (P2) radially opposite the end (21) of the cutting edge (15), and that the upper blade (11) positioned farther away from the bottom surface (5) is inclined in a radial direction to the bottom surface (5) of the working vessel (1) at an angle (γ), such that the outer region of the blade (11), measured vertically to the bottom surface (5), is spaced a smaller distance than the radially inner region of the blade (11).

2. The cutting and blending tool as claimed in claim 1, characterized in that the angle (γ) is in the range of between 5° and 10°, preferably between 7° and 9°.

3. The cutting and blending tool as claimed in claim 1, characterized in that the curvature progressively increases from the upper blade (11) to the lower blade (10) positioned closer to the bottom surface at least in the radially outer end regions (17, 22) of the cutting edges (14, 15).

4. The cutting and blending tool as claimed in claim 1 or claim 2, characterized in that the radially outer region of the cutting edge (15) of the upper blade (11) is defined by a straight line (18).

5. The cutting and blending tool as claimed in claim 1, characterized in that the upper blade (11) positioned farther away from the bottom surface (5) is inclined in the circumferential direction towards the bottom surface (5) of the working vessel (1), such that the free end (17) of the blade (11), measured vertically to the bottom surface (5), is spaced a smaller distance from the bottom surface than its fixed end.

6. The cutting and blending tool as claimed in claim 5, characterized in that, when viewed in the circumferential direction of the upper blade (11), the vertical distance (a) between the free end (21) and the fixed end on the central hub (4) is 2 mm, approximately.

# FIG.1

# FIG.4

# FIG.2

# FIG.3